# EUROPÄISCHE PATENTSCHRIFT

(11) **EP 3 414 993 B1**
(45) Veröffentlichungstag und Bekanntmachung des Hinweises auf die Patenterteilung: **30.09.2020**
(21) Anmeldenummer: 18000513.4
(22) Anmeldetag: 12.06.2018
(51) Int. Cl.: A01F 15/14, A01B 71/08

(54) **LANDWIRTSCHAFTLICHE GROSSPACKENPRESSE**
AGRICULTURAL LARGE PACKING PRESS
PRESSE À GROSSES BALLES AGRICOLE

(30) Priorität: 14.06.2017 DE 102017005667
(43) Veröffentlichungstag der Anmeldung: 19.12.2018
(73) Patentinhaber: Maschinenfabrik Bernard Krone GmbH & Co. KG, 48480 Spelle (DE)
(72) Erfinder: Oskamp, Tobias, 48607 Ochtrup (DE)

(56) Entgegenhaltungen:
- EP-A1- 2 289 305
- EP-A1- 2 709 432
- EP-A1- 3 028 562
- US-A- 4 805 391
- US-B1- 7 318 376

## Beschreibung

Die Erfindung betrifft eine landwirtschaftliche Großpackenpresse zur Verdichtung von auf dem Feldboden befindlichen Erntematerial wie Stroh, Heu oder dergleichen, welche ein Führungselement zur Aufnahme und zum Abtransport unerwünschten Materials nach dem Oberbegriff des Anspruchs 1 aufweist.

In der Landwirtschaft sind Großpackenpressen, auch als Quader-, Vierkant- oder Großballenpressen bezeichnet, seit geraumer Zeit bekannt und werden in zahlreichen Varianten eingesetzt. Zu den großen Vorteilen dieser Landmaschinen zählen unter anderem die kontinuierliche Pressarbeit, eine in der Regel hohe Pressdichte und die gute Lagerbarkeit der gefertigten Erntegutballen. Dazu sammeln diese Maschinen zunächst auf dem Feld liegendes Erntegut mit Hilfe einer Aufnahmevorrichtung, landläufig als Pick-Up bekannt, auf. Im Anschluss daran wird das Erntegut von einer Fördereinrichtung übernommen, beispielsweise einem Förderrotor und/oder einer Raffereinheit. Diese fördert das Erntegut in einen zum Presskanal führenden Förderkanal. Sobald der Presskolben weit genug zurückgefahren wurde, wird das gesammelte Erntegut in die Presskammer befördert, wo es durch den Presskolben zu einem Erntegutballen, auch als Quaderballen, Großpacken oder Vierkantballen bezeichnet, verdichtet wird. Damit die Großpacken nach ihrem Ausstoß aus dem Presskanal ihre Form behalten, werden sie mit Bindematerial umschlungen. Dazu wird aktuell insbesondere Garn eingesetzt.

Wie bei vielen Maschinentypen im landwirtschaftlichen Sektor ist auch bei Großpackenpressen das Bestreben der Hersteller zu erkennen, den Kundenwünschen nach Maschinen mit höherer Leistungsfähigkeit bestmöglich nachzukommen. Mit diesen Anforderungen gehen allerdings auch neue Herausforderungen für die Maschinenhersteller einher. Im Bereich der Großpackenpressen bedeutet erhöhte Leistungsfähigkeit besonders höhere Durchsatzleistung bei größtmöglicher Pressdichte. Die Pressdichte einer Großpackenpresse hängt dabei unter anderem von der Presskraft der Maschine ab. Das eingesetzte Material, mit dem der Erntegutballen umschlungen wird, spielt dabei eine entscheidende Rolle. Diese Game nehmen, je nach Fabrikat und Qualität, zum Teil Kräfte über 5 kN auf. Da diese Bindematerialien jedoch getrennt und neu verbunden werden müssen, nimmt die maximale Belastbarkeit ab. Diese Problematik tritt besonders bei Bindeeinheiten auf, welche einen Erntegutballen sowohl zum Beginn, als auch zum Ende des Pressvorgangs mit einem Knoten versehen. Diese als "Doppelknoter" bezeichneten Bindeeinheiten erfreuen sich steigender Beliebtheit. Das ist darauf zurückzuführen, dass die Bindeeinheit und das Bindematerial sich während des Pressvorgangs nicht gegenseitig belasten. Die sogenannten "Einfachknoter" versehen den Erntegutballen nur mit einem Knoten, also einem Schwachpunkt. Doch während des Pressvorgangs muss das Bindematerial bei/von der Bindeeinheit gehalten werden. Dadurch sind Bindematerial und -einheit während des gesamten Pressvorgangs belastet und stehen unter Spannung. Hierdurch wird der Verschleiß an den Komponenten der Bindeeinheit erheblich verstärkt. Weiterhin leidet die Belastbarkeit des Bindematerials durch die dauerhafte Strapazierung.

Durch die Verwendung eines "Doppelknoters" können, ganzheitlich betrachtet, bessere Ergebnisse erzielt werden. Insbesondere bezüglich des Verschleißes der Bindeeinheit und der Belastbarkeit des Bindematerials. Jedoch bringt der "Doppelknoter" einen entscheidenden Nachteil mit sich, der bislang im Stand der Technik nicht hinreichend behandelt wurde. Denn durch das eingesetzte Verfahren der aktuell bekannten und eingesetzten Bindeeinheiten vom Typ "Doppelknoter" bleibt ein Bindematerialrest beim Umschlingen eines Erntegutballens übrig. In der Regel befindet sich die Bindeeinheit oberhalb des Presskanals. Dadurch besteht die Gefahr, dass die erwähnten Bindematerialreste in einen Erntegutballen geraten.

Dafür können sowohl Vibrationen der Maschine oder mangelnde Ablagefläche an/ bei der Bindeeinheit verantwortlich sein. Darüber hinaus sind als Reinigungseinheiten eingesetzte Luftstromerzeuger oftmals für dieses Risiko verantwortlich. Diese Luftstromerzeuger sind zumeist als Gebläse ausgeführt, welche Luft entgegen der Fahrtrichtung gegen die Bindeeinheit fördern. Dadurch wird Material entfernt, dass die Bindeeinheit zu blockieren droht. Dazu gehören bei den erwähnten "Doppelknotern" aber auch die zumeist synthetischen Bindematerialreste. Zu versorgende Tiere könnten also das Bindematerial versehentlich fressen. Dieses Bindematerial, bzw. dessen Reste sind nicht/ oder nur schwer verdaulich und können zu erheblichen Problemen bei den Tieren führen.

Im Stand der Technik ist ein Lösungsansatz für landwirtschaftliche Pressen mit Knoter(n) als Bindeeinheit durch die Patentschrift US 4,805,391 eröffnet. Dabei sollten, bei als Bindeeinheiten eingesetzten Garnknotern, anfallende Garnreste abgesaugt werden. Durch das zumeist staubige Arbeitsumfeld von Großpackenpressen neigen Bindeeinheiten wie Knoter zu Fehlfunktionen. Um diesen Fehlfunktionen vorzubeugen werden im Bereich der Bindeeinheiten bei Großpackenpressen zuvor erwähnte Reinigungseinrichtungen eingesetzt, die einen Luftstrom im Bereich der Knoter hervorrufen. Hierbei kommen sowohl Drucklufteinrichtungen als auch Gebläse mit konstantem Luftstrom zum Einsatz. Dadurch wird ein Absaugen der Bindematerialreste erschwert oder gar verhindert. Aktuellen Großpackenpressen kann die in der Patentschrift aufgezeigte Lösung daher nicht weiterhelfen.

Die Druckschrift US 4,805,391 schlägt vor, Gamschränze mittels eines Sauggebläses durch Rohre in einen Behälter abzuleiten.

Aufgabe der vorliegenden Erfindung ist daher, eine landwirtschaftliche Großpackenpresse anzubieten, welche eine benutzerfreundliche und dennoch einfache Möglichkeit zur Bewältigung der im Stand der Technik auftretenden Herausforderungen anbietet, indem eine Reinigungseinheit um eine einfache Baugruppe ergänzt wird und sowohl zur Reinigung der Bindeeinheit beiträgt, als auch sicher verhindert, dass Bindematerialreste in einen zu pressenden Großpacken geraten.

Die Aufgabe wird durch eine landwirtschaftliche Großpackenpresse gemäß den Merkmalen des Anspruchs 1 gelöst, wobei vorteilhafte Weiterbildungen aus den weiteren Patentansprüchen und den Ausführungsbeispielen hervorgehen. In den folgenden Ausführungsbeispielen und Beschreibungen sind Angaben wie "oben", "unten", "links", "rechts", "vorne" und "hinten" bezogen auf eine landwirtschaftliche Großpackenpresse mit der Zugdeichsel in Fahrtrichtung weisend zu verstehen.

Die erfindungsgemäße, landwirtschaftliche Großpackenpresse ist ausgestattet mit einem Fahrwerk zum Abstützen der Großpackenpresse auf dem Feldboden, einer Aufnahmevorrichtung zum Bergen von auf dem Feldboden liegenden Erntegut, wenigstens einer Fördereinrichtung zur Beförderung des geborgenen Ernteguts in einen Presskanal, in welchem ein hin und her beweglich angetriebener Presskolben dazu ausgelegt ist, das Erntegut zu einem Erntegutballen zu verdichten, mit wenigstens einer dem Presskanal zugeordneten Bindeeinheit zur Umreifung des Erntegut mit Bindematerial, sowie wenigstens einem Luftstromerzeuger zur Reinigung der Bindeeinheit, wobei der Bindeeinheit ein Führungselement zugeordnet ist, welches unerwünschtes Material aufnimmt und durch den vom Luftstromerzeuger hervorgebrachten Luftstrom von der Bindeeinheit wegleitet. Bei dem unerwünschten Material handelt es sich um Bindematerialreste oder Erntegutreste.

Gemäß der Erfindung wird eine landwirtschaftliche Großpackenpresse zunächst mit einem Luftstromerzeuger, ausgeführt als Reinigungsgebläse, für die Bindeeinheit ausgestattet. Dieses Reinigungsgebläse ist im besten Fall mit seiner Förderrichtung leicht in Fahrtrichtung der Großpackenpresse ausgerichtet. An der Bindeeinheit angeordnet befindet sich ein erfindungsgemäßes Führungselement. Ein derartiges Führungselement wird als eine Art Luftkanal ausgeführt.

Weiterhin ist es derart ausgeführt, dass unerwünschtes Material unmittelbar an der Bindeeinheit (12) aufgenommen wird. Dieses Führungselement liegt dabei mit seiner tiefsten Stelle unterhalb der Position der Bindeeinheit von der die Bindematerialreste ausgehen. Von dieser tiefsten Stelle des Führungselements werden bevorzugt Fortsätze zu der Stelle geführt, an der Bindematerialreste durch die Bindeeinheit entstehen. Im Optimalfall kann nun nach einem ausgelösten Bindevorgang der Bindematerialrest direkt auf dem dazugehörigen Fortsatz des Führungselements abgelegt werden. Geschickter Weise fördert der konstant arbeitende Luftstromerzeuger die abgelegten oder anderweitig von den Fortsätzen aufgefangenen Bindematerialreste in das Führungselement. An der Rückwand des Führungselements angelangt, können die Bindematerialreste durch verschieden ausgeführte Anwendungen entfernt werden.

Bevorzugt wird auch hierbei die Kombination des Führungselements mit einem Luftstromerzeuger in Form eines konstant arbeitenden Gebläses. Die Bindeeinheit wird dabei von einem Gehäuse umschlossen. Erfindungsgemäß beherbergt das Gehäuse den Luftstromerzeuger. Der Luftstromerzeuger ist in einer Ausführung dazu ausgelegt, einen stetigen, konstanten Luftstrom zu erzeugen. Allerdings ist auch die Nutzung anderer Luftstromerzeuger denkbar. Denkbar wäre eine Druckluftvorrichtung, welche in regelmäßigen Intervallen die Bindeeinheit reinigt. Weiterhin kann die Druckluftreinigung auch an den Bindevorgang gekoppelt sein.

Erfindungsgemäß wird das Gehäuse möglichst luftdicht von der Umgebung abgeschirmt. Dadurch wird ein Überdruck im Bereich der Bindeeinheit erzeugt. Dieser Überdruck hält die staubige Umgebungsluft und Erntegutreste von der Bindeeinheit fern. Zudem wird das Führungselement mit wenigstens einem Luftauslass versehen, so dass der generierte Luftstrom die aufgenommenen Bindematerialreste herausleiten kann. Erfindungsgemäß ist dem Führungselement wenigstens ein Leitelement zugeordnet.

Diese Leitelemente sind beispielsweise als flossenartige Bleche schräg in Richtung Luftauslass gerichtet. So wird der erzeugte Luftstrom derart beeinflusst, dass wenig/oder keine Verwirbelungen entstehen. Der Abtransport der unerwünschten Materialien, wie Bindematerial oder Erntegutreste, erfolgt demnach zügiger.

Eine besonders bevorzugte Ausführung sieht vor, das Führungselement quer zur Fahrtrichtung anzulegen. Durch den Luftstrom kann das unerwünschte Material also seitlich der Presskammer ausgeworfen werden, ohne in oder auf den zu pressenden Erntegutballen zu gelangen. Dabei können zuvor beschriebene oder ähnliche Luftleitelemente besonders hilfreich sein.

Insbesondere bei der Verwendung synthetischer Bindematerialien kann selbst der Ausstoß des unerwünschten Materials seitlich oder hinter der Maschine unerwünscht sein. Denn es besteht die Möglichkeit, dass bei einem folgenden Erntevorgang derart entsorgtes Bindematerial, bzw. dessen Reste, beispielsweise durch die Aufnahmevorrichtung einer Landmaschine aufgenommen werden und direkt in den Erntegutfluss gelangen. Daher wird weiterhin vorgeschlagen, das von der Bindeeinheit weisende Ende des Führungselements mit einer Vorrichtung zum Auffangen des unerwünschten Materials auszustatten. In diesem Fall ist auch ein Führungselement denkbar, dessen Luftauslass etwa parallel zur Fahrtrichtung ausgerichtet ist. Durch die Auffangvorrichtung kann auch hier eine Ablage unerwünschten Materials auf den Erntegutballen verhindert werden.
Da bei dem Vorgang der Umreifung die Bindeeinheit durch die als Nadel bekannte Bindematerialübergabe mit Bindematerial versorgt wird, kann Erntegut in den Bereich der Bindeeinheit gelangen. Denn die Bindematerialbeschickung der Bindeeinheit muss durch den Presskanal gelangen, um das Bindematerial an die Bindeeinheit zu übergeben. Wird nun ein Führungselement eingesetzt um unerwünschtes Material abzutransportieren, könnten Erntegutreste einem Presseelement zurückgeführt werden. Bei Bindeeinheiten, die Bindematerialreste erzeugen hingegen, sollten diese Bindematerialreste aufgenommen und gesammelt werden, um Gefahren für Tiere durch Verunreinigung ihres Streus/Futters zu vermeiden.

Um optimale Ergebnisse zu erzielen, wird eine Vorrichtung zum Trennen des bei der Bindeeinheit unerwünschten Materials empfohlen. Zum einen können durch eine Trennung der unerwünschten Materialien Gefäße für die Sammlung von Bindematerialresten in ihrer Größe der landwirtschaftlichen Großpackenpresse angepasst werden. Der Sammelbehälter kann kleiner ausgeführt werden, um bei geringem räumlichen Platz eingesetzt werden zu können. Oder der Sammelbehälter wird trotz Trennung der Bindematerialreste größtmöglich verbaut, um eine längere fehlerlose Einsatzzeit zu ermöglichen. In jedem Fall kann die Einsatzzeit der landwirtschaftlichen Großpackenpresse mit einer derartigen Sammeleinrichtung erhöht werden. Denn die Erntegutreste werden in der Regel eine geringere Masse aufweisen, jedoch durchaus räumlichen Platz in Sammelbehältnissen einnehmen, sollte eine Trennung nicht stattfinden. Da in der Regel die Erntegutreste eine geringere Masse aufweisen als die Bindematerialreste, kann ein zweigeteilter Luftauslass des Führungselements bereits ausreichen, um eine Trennung vorzunehmen. Durch die unterschiedliche Masse der unerwünschten Materialien kann diese Zweiteilung des Luftauslasses idealerweise durch ein horizontales Element erfüllt werden. Demnach wird gemäß dieser vorteilhaften Ausführung ein Sammelbehältnis in dem unteren der beiden Bereiche des Luftauslass des erfindungsgemäßen Führungselements angebracht. Im oberen Bereich kann nun wahlweise eine Vorrichtung zur Rückführung der Erntegutreste in den Erntegutfluss erfolgen. Auch eine Führung des Luftstromanteils mit Erntegutresten ist ausführbar. Durch Leitelemente zum Führen der Erntegutreste können Verschmutzungen weitere Maschinenelemente verhindert oder zumindest vermieden werden.

Darüber hinaus sind verschiedene Ausführungen von Sammelbehältnissen denkbar. Eine Ausführung aus Metall kann ebenso Vorteile bieten, wie eine Ausführung aus Kunststoff. Eine Ausführung als Metall kann möglicherweise besser befestigt werden. Oder einen verbesserter Widerstand eines metallenen Sammelbehältnisses bezüglich stärkerer Luftströmung kommt in den Sinn. Offensichtliche Vorteile eines Sammelbehältnisses aus Kunststoff wären das verringerte Gewicht dieser Ausführung. Weiterhin sind Kunststoffgewebe sicher durch ihr geringes Gewicht und ihre Flexibilität vorteilhaft. Darüber hinaus könnte ein Kunststoffgewebe grobmaschig genug ausgeführt sein, um den Luftstrom bis zur Füllung des Sammelbehältnisses hindurch zu lassen. Dadurch können Verwirbelungen vermieden werden, welche sonst möglicherweise die gesammelten Bindematerialreste wieder auf den Erntegutballen oder in die Umwelt abgeben.

Nachfolgend wird eine bevorzugte Ausführungsform der Erfindung anhand einiger Zeichnungen näher beschrieben. Die Zeichnungen zeigen:
**FIG.1****:** eine perspektivische Ansicht einer landwirtschaftlichen Großpackenpresse ohne einen Großteil der Schutzverkleidung, sodass die Position der Bindeeinheit und des dazugehörigen Luftstromerzeuger sichtbar wird;
**FIG.2****:** eine Ansicht im Längsschnitt zur weiteren Verdeutlichung der Positionierung und Funktionsweise des Luftstromerzeugers und einem erfindungsgemäßen Führungselement;
**FIG.3****:** eine erfindungsgemäße Bindeeinheit mit dazugehörigem Luftstromerzeuger und erfindungsgemäßem Führungselement zum Entfernen von unerwünschtem Material.

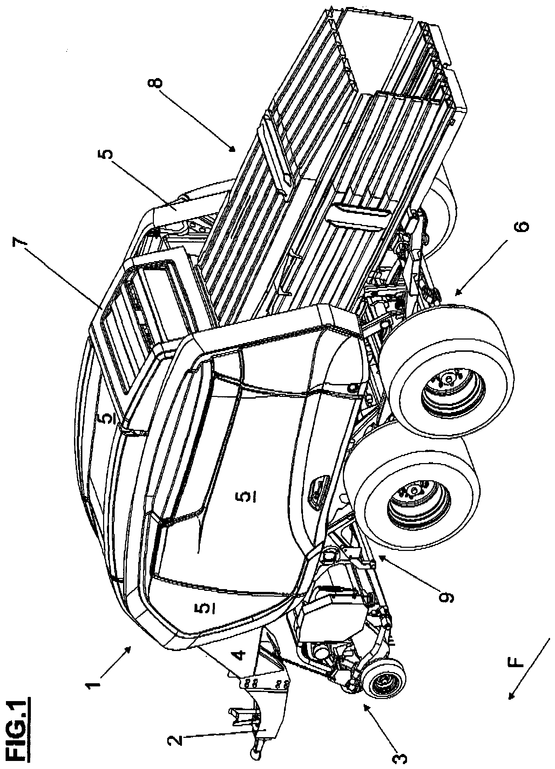

In **FIG.1** wird eine landwirtschaftliche Großpackenpresse 1 gemäß der Erfindung, Zunächst lässt sich ein aus dem Stand der Technik vertrauter Aufbau mit einer Zugdeichsel 2 und einer darauf folgenden Aufnahmevorrichtung 3 erkennen. Durch diese Zugdeichsel 2 ist eine Zugmaschine in der Lage, die landwirtschaftliche Großpackenpresse 1 anzuhängen und über den Feldboden B in Fahrtrichtung F zu bewegen. Aus Sicherheitsgründen werden die am Maschinenhauptrahmen 4 befindlichen, beweglich angetriebenen Maschinenelemente von Maschinenverkleidungen 5 verdeckt. Nebenbei können die Maschinenverkleidungen 5 optisch ansprechend gestaltet werden, um auch einen ästhetischen Anreiz/ eine optische Unterscheidungskraft zu Mitbewerbern anzubieten. Die gesamte Großpackenpresse 1 stützt sich mit Hilfe eines Fahrwerks 6 zum Feldboden B ab. Ebenfalls sichtbar, aber erst in der folgenden Figur genauer erkennbar, sind das Gehäuse 7 für die Bindeeinheit 12 und der Presskanal 8.

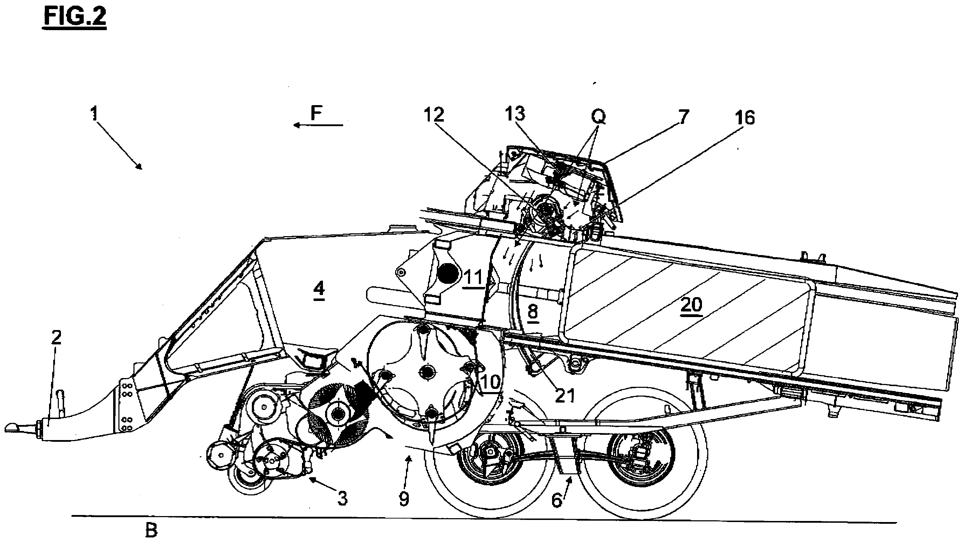

Nachdem das Erntegut von der Aufnahmevorrichtung 3 vom Feldboden B aufgelesen ist, lässt sich durch die **FIG.2** die weitere Funktionsweise nachvollziehen. Eine Fördereinrichtung 9 übernimmt das geborgene Erntegut von der Aufnahmevorrichtung 3 und sammelt es zunächst ein einem Förderkanal 10. In der Darstellung besteht die Fördereinheit aus einem Förderrotor und einer Zinkenraffereinheit. Sobald der Presskolben 11 durch den dazugehörigen Antrieb (nicht dargestellt) im Presskanal 8 nach vorne verfährt, wird durch zumindest einen Teil der Fördereinrichtung 9 das im Förderkanal 10 gesammelte Erntegut in den Presskanal 8 gefördert. Wird der Presskolben 11 jetzt wieder nach hinten bewegt, wird das grade eingeschobene Erntegut im Presskanal 8 zu einem Erntegutballen 20 verdichtet. Der Erntegutballen 20 wird zusätzlich mit Bindematerial umschlungen. Das geschieht, damit der Erntegutballen 20 nach dem Verlassen des Presskanals 8 seine Form nicht verliert und/oder zerfällt. Um das Bindematerial von unterhalb eines zu umschlingenden Erntegutballen 20 hinauf zur oberhalb des Presskanals 8 angeordneten Bindeeinheit 12 zu befördern, werden Elemente zur Bindematerialübergabe 21 eingesetzt. Diese Bindematerialübergabe 21 wird für gewöhnlich als "Nadel" bezeichnet, da sie das Bindematerial, zumeist also einen Garnfaden durch den Presskanal 8 durchreicht. Zur besseren Übersicht ist an dieser Stelle die Maschinenverkleidung 5 weggelassen. Lediglich das Gehäuse 7 des Luftstromerzeugers 13 wird dargestellt.

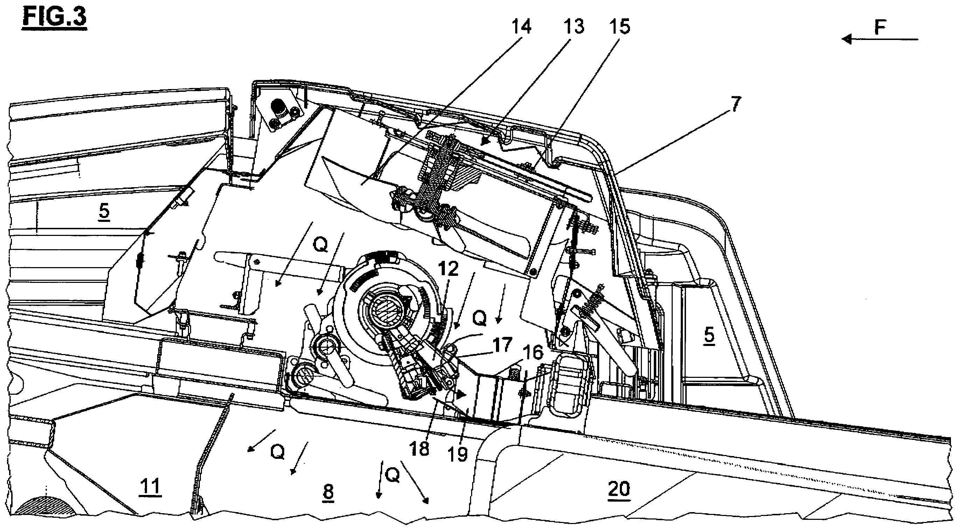

Dieses Gehäuse 7 und die umgebenden Maschinenelemente werden in **Fig.3** in den Fokus gerückt. Durch die Darstellung des erfindungsgemäßen, größtenteils luftdicht ausgeführten Gehäuses 7 und des dazugehörigen Luftstromerzeugers 13, wird auch deutlich, wie der erzeugte Luftstrom Q erfindungsgemäß im Gehäuse 7 auf die Bindeeinheit 12 und die umgebenden Maschinenelemente wirkt. Ein Teil des Luftstroms Q gelangt durch die Öffnungen für die Bindematerialübergabe 21 in den Presskanal 8. Ein weiterer Teil des Luftstroms Q wird durch ein oberes Leitelement 17 des Führungselementes 16 an den Teil der Bindeeinheit 12 gezwungen, an dem ein Bindematerialrest entsteht. Dadurch fördert dieser Teil des erzeugten Luftstroms Q den entstehenden Bindematerialrest auf das untere Leitelement 18 des kanalartigen Führungselements 16 und weiter an die Rückwand des Führungselements 16. Durch den Einsatz weiterer Leitelemente 19 wird der Abtransport der Bindematerialreste durch Leitung des Luftstroms Q im Führungselement 16 begünstigt. Die Bindeeinheit 12 liegt direkt vor dem Führungselement 16, sodass auch bei diskontinuierlicher Betätigung des Luftstromerzeugers 13 ein Bindematerialrest zunächst auf dem unteren Leitelement 18 abgelegt werden kann. In jedem Fall fördert der erzeugte Luftstrom Q den abgelegten Bindematerialrest nun aus dem Bereich der Bindeeinheit 12, bzw. aus dem Gehäuse 7. Weiterhin lässt sich erkennen, dass der erzeugte Luftstrom Q durch die unterhalb der Bindeeinheit 12 befindliche Decke des Presskanals 8 gelangen kann. Dadurch können weitere Maschinenelemente positiv von dem Luftstrom Q beeinflusst werden. Beispielsweise kann bei ausreichendem Volumen des Luftstroms Q ein Teil des Presskolbens 11 von Staub oder ähnlichen Fremdkörpern gereinigt werden. Ebenso können Verschmutzungen des Ernteguts vermindert werden, indem Emtegut, welches aus dem Förderkanal 10 in den Presskanal 8 geschoben wird im noch gering verdichteten Zustand durchströmt werden, bevor es durch den Presskolben 11 im Presskanal zu einem Erntegutballen 20 verdichtet wird.

**Bezugszelchenllste:**

| | | | |
|---|---|---|---|
| 1. | Großpackenpresse | Q - | Luftstrom |
| 2. | Zugdeichsel | F - | Fahrtrichtung |
| 3. | Aufnahmevorrichtung | B - | Feldboden |
| 4. | Maschinenhauptrahmen | | |
| 5. | Maschinenverkleidung | | |
| 6. | Fahrwerk | | |
| 7. | Gehäuse | | |
| 8. | Presskanal | | |
| 9. | Fördereinrichtung | | |
| 10. | Förderkanal | | |
| 11. | Presskolben | | |
| 12. | Bindeeinheit | | |
| 13. | Luftstromerzeuger | | |
| 14. | Rotorblatt | | |
| 15. | Antrieb | | |
| 16. | Führungselement | | |
| 17. | Oberes Leitelement | | |
| 18. | Unteres Leitelement | | |
| 19. | Inneres Leitelement | | |
| 20. | Erntegutballen | | |
| 21. | Bindematerialübergabe (Nadel) | | |

## Patentansprüche

1. Landwirtschaftliche Großpackenpresse (1) mit einem Fahrwerk (6) zum Abstützen der Großpackenpresse (1) auf dem Feldboden (B), einer Aufnahmevorrichtung (3) zum Bergen von auf dem Feldboden (B) liegenden Erntegut, wenigstens einer Fördereinrichtung (4) zur Beförderung des geborgenen Ernteguts in einen Presskanal (8), in welchem ein hin und her beweglich angetriebener Presskolben (11) dazu ausgelegt ist, das Erntegut zu einem Erntegutballen (20) zu verdichten, mit wenigstens einer dem Presskanal (8) zugeordneten Bindeeinheit (12) zur Umreifung des Erntegutballens (20) mit Bindematerial, sowie wenigstens einem Luftstromerzeuger (13) zur Reinigung der Bindeeinheit (12), wobei der Bindeeinheit (12) ein Führungselement (16) zugeordnet ist, welches unerwünschtes Material aufnimmt und durch den vom Luftstromerzeuger (13) hervorgebrachten Luftstrom (Q) von der Bindeeinheit (12) wegleitet, wobei es sich bei unerwünschtem Material um Bindematerialreste oder Erntegutreste handelt, **dadurch gekennzeichnet, dass** die Bindeeinheit (12) von einem Gehäuse (7) umschlossen ist, das möglichst luftdicht von der Umgebung abgeschirmt ist, so dass ein Überdruck im Bereich der Bindeeinheit (12) erzeugt wird, wobei das Führungselement (6) als eine Art Luftkanal und derart ausgeführt ist, dass unerwünschtes Material unmittelbar an der Bindeeinheit (12) aufgenommen wird, und wobei das Führungselement (16) mit wenigstens einem Luftauslass versehen ist, so dass der generierte Luftstrom (Q) die aufgenommenen Bindematerialreste herausleiten kann, und wobei dem Führungselement (16) wenigstens ein Leitelement (17/18/19) zugeordnet ist, welches den erzeugten Luftstrom (Q) in zumindest eine bevorzugte Richtung leitet.

2. Landwirtschaftliche Großpackenpresse (1) nach Anspruch 1, **dadurch gekennzeichnet, dass** der Luftstromerzeuger (13) dazu eingerichtet ist, unerwünschtes Material in zumindest einer dem Bindevorgang angepassten Frequenz durch Erzeugung eines Luftstroms (Q) von der Bindeeinheit (12) in Richtung des Führungselementes (16) zu fördern.

3. Landwirtschaftliche Großpackenpresse (1) nach Anspruch 1 oder 2, **dadurch gekennzeichnet, dass** das Führungselement (16) derart ausgeformt ist, dass unerwünschtes Material seitlich zur Fahrtrichtung (F) der Großpackenpresse (1) entfernt wird.

4. Landwirtschaftliche Großpackenpresse (1) nach zumindest einem der vorherigen Ansprüche, **dadurch gekennzeichnet, dass** dem Führungselement (16) zumindest eine Vorrichtung zum Auffangen von zumindest einem Teil des unerwünschten Materials nachgeordnet ist.

5. Landwirtschaftliche Großpackenpresse (1) nach Anspruch 4, **dadurch gekennzeichnet, dass** die Vorrichtung zum Auffangen von unerwünschtem Material darüber hinaus in der Lage ist, das aufgefangene Material voneinander zu trennen.

6. Landwirtschaftliche Großpackenpresse (1) nach Anspruch 5, **dadurch gekennzeichnet, dass** die Trennung von Bindematerialresten und Erntegutresten durch den Luftstrom (Q) wenigstens unterstützt wird.

## Claims

1. Agricultural large square baler (1) having a carriage (6) for supporting the large square baler (1) on the field soil (B), a receiving device (3) for recovering crops lying on the field soil (B), at least one conveying means (4) for conveying the harvested crops into a baling channel (8), in which channel a reciprocatingly driven baling piston (11) is designed to compress the crops to a crop bale (20), having at least one binding unit (12) associated with the baling channel (8) for strapping the crop bale (20) with binding material, and having at least one air flow generator (13) for cleaning the binding unit (12), a guide element (16) being associated with the binding unit (12), which guide element picks up unwanted material and directs said material away from the binding unit (12) by means of the airflow (Q) produced by the air flow generator (13), undesirable material being binding material residues or crop residues, **characterised in that** the binding unit (12) is enclosed by a housing (7) which is shielded from the environment so as to be as airtight as possible, such that an overpressure is generated in the region of the binding unit (12), the guide element (6) being designed as a kind of air duct and such that undesired material is picked up directly at the binding unit (12), and the guide element (16) being provided with at least one air outlet, such that the generated air flow (Q) can discharge the received binding material residues, and at least one directing element (17/18/19) being associated with the guide element (16), which directing element directs the generated air flow (Q) in at least one preferred direction.

2. Agricultural large square baler (1) according to claim 1, **characterised in that** the air flow generator (13) is designed to convey undesired material in the direction of the guide element (16), in at least one frequency adapted to the binding process, by generating an air flow (Q) from the binding unit (12).

3. Agricultural large square baler (1) according to either claim 1 or claim 2, **characterised in that** the guide element (16) is shaped such that undesired material is removed laterally with respect to the direction of travel (F) of the large square baler (1).

4. Agricultural large square baler (1) according to at least one of the preceding claims, **characterised in that** at least one device for collecting at least part of the undesired material is arranged downstream of the guide element (16).

5. Agricultural large square baler (1) according to claim 4, **characterised in that** the device for collecting undesirable material is also able to separate the collected material.

6. Agricultural large square baler (1) according to claim 5, **characterised in that** the separation of binding material residues and crop residues is at least supported by the air flow (Q).

## Revendications

1. Presse agricole à grosses balles (1) comportant un châssis de roulage (6) pour soutenir la presse à grosses balles (1) sur le terrain (B), un dispositif de collecte (3) pour collecter les produits de récolte sur le sol (B), au moins une installation de transfert (4) pour transférer les produits récoltés dans un canal de presse (8) muni d'un piston de presse (11) entraîné selon un mouvement de va-et vient pour comprimer les produits de récolte en une balle de produits de récolte (20), comportant au moins une unité de nouage (12) associée au canal de presse (8) pour cercler la balle de produits de récolte (20) avec un matériel de nouage et au moins un générateur de flux d'air (13) pour nettoyer l'unité de nouage (12),
l'unité de nouage (12) comportant un élément de guidage (16) qui reçoit les déchets et les évacue de l'unité de nouage (12) par le flux d'air (Q) fourni par le générateur de flux d'air (13) pour dégager l'unité de nouage (12),
les déchets sont des résidus de matériel de nouage ou des restes de récolte,
presse **caractérisée en ce que**
l'unité de nouage (12) est entourée par un boîtier (7) protégé de façon aussi étanche à l'air que possible vis-à-vis de l'environnement de façon à générer une pression dans la région de l'unité de nouage (12), l'élément de guidage (6) étant réalisé comme une sorte de canal d'air de façon que les déchets directement récupérés sur l'unité de nouage (12) et l'élément de guidage (16) comporte au moins une sortie d'air de façon que le flux d'air (Q), généré, puisse évacuer les résidus de matériel de nouage, ainsi pris et l'élément de guidage (16) comporte au moins un élément directeur (17, 18, 19) pour diriger le flux d'air (Q) dans au moins une direction préférentielle.

2. Presse agricole à grosses balles (1) selon la revendication 1,
**caractérisée en ce que**
le générateur de flux d'air (13) est conçu pour transférer les déchets à une fréquence adaptée à l'opération de nouage en générant un flux d'air (Q) allant de l'unité de nouage (12) en direction de l'élément de guidage (16).

3. Presse agricole à grosses balles (1) selon la revendication 1 ou 2,
**caractérisée en ce que**
l'élément de guidage (16) est formé pour évacuer tout déchet latéralement à la direction de circulation (F) de la presse à grosse balles (1).

4. Presse agricole à grosses balles (1) selon au moins l'une des revendications précédentes,
**caractérisée en ce que**
l'élément de guidage (16) comporte au moins un dispositif pour récupérer au moins une partie des déchets.

5. Presse agricole à grosses balles (1) selon la revendication 1,
**caractérisée en ce que**
le dispositif pour récupérer les déchets peut séparer les produits retenus.

6. Presse agricole à grosses balles (1) selon la revendication 5,
**caractérisée en ce que**
la séparation des résidus de matière de nouage et des restes de produits récoltés est assistée par le flux d'air (Q).
